# EUROPÄISCHE PATENTSCHRIFT

(11) **EP 0 505 687 B1**
(45) Veröffentlichungstag und Bekanntmachung des Hinweises auf die Patenterteilung: **17.01.1996**
(21) Anmeldenummer: 92101397.5
(22) Anmeldetag: 29.01.1992
(51) Int. Cl.: B65D 73/00

(54) **Verpackung zur Präsentation quaderförmiger Waren**
Display package for rectangular products
Emballage présentoir pour objets rectangulaires

(30) Priorität: 27.03.1991 DE 9103752 U
(43) Veröffentlichungstag der Anmeldung: 30.09.1992
(73) Patentinhaber: Wilkinson Sword Gesellschaft mit beschränkter Haftung, D-42659 Solingen (DE)
(72) Erfinder: Grange, Kenneth, London NW3 1LG (GB)
(74) Vertreter: Tesch, Rudolf, Dr.

(56) Entgegenhaltungen:
- US-A- 2 000 870
- US-A- 3 658 175
- US-A- 3 918 583
- US-A- 4 558 783

## Beschreibung

Die Erfindung betrifft eine Verpackung zur Präsentation von im wesentlichen quaderförmigen Waren, insbesondere von mit Rasierklingeneinheiten befüllten Spendern, mit einem Papier- oder Pappstreifen und einer mindestens einen Spender haltenden Aufnahmevorrichtung, wobei auf dem Papier- oder Pappstreifen ein zweiter Papier- oder Pappstreifen angeordnet ist, der zwei quer zu seiner Längsrichtung verlaufende mit Abstand zueinander parallel angeordnete Auffalzungen aufweist, in denen zwei sich gegenüberliegend angeordnete, Aufnahmevorrichtungen bildende im wesentlichen rechteckige Öffnungen ausgebildet sind.

Derartige Verpackungen sind im Stand der Technik bekannt. Beispielsweise sind Verpackungen zur Präsentation von Spendern für Rasierklingeneinheiten bekannt, die aus einem Papier- oder Pappstreifen mit einem darauf geklebten, vorzugsweise transparenten Kunststoffdeckel bestehen, welcher im wesentlichen die Form des zu präsentierenden quaderförmigen Gegenstandes hat. Bei diesen Verpackungen, welche als sogenannte Blisterverpackungen bekannt sind, ist es nachteilig, daß der aufgeklebte Kunststoffdeckel sowohl bei seiner Produktion als auch als Abfallstoff eine starke Umweltbelastung darstellt. Derartige Kunststoffteile sind nur mit sehr großem Aufwand von dem übrigen Müll zu trennen und nur in aufwendigen Verfahren zu recyceln. Ferner ist es bei den vorbekannten Verpackungen nachteilig, daß ihre Herstellung sehr kostenintensiv ist, da unterschiedliche Materialen verwendet und zusammengeführt werden müssen. Auch stellt die sogenannte Blisterkarte der Blisterverpackung eine Umweltbelastung dar, da die sichtbare Oberfläche mit einer siegelfähigen Schicht beschichtet ist, welche unter Verwendung von kohlenwasserstoffhaltigen Lösungsmitteln hergestellt wird.

Gattungsgemäße Verpackungen orientieren sich an Form und Ausgestaltung des zu verpackenden Produktes. Sie sind insbesondere derart auszugestalten, daß die Zuschnitte automatisch herstellbar sind und eine möglichst effiziente Ausnutzung der Papier-/ Pappzuschnitte erlauben.

Aus der US-PS 3 918 583 ist eine Verpackung der gattungsgemäßen Art bekannt, bei welcher durch einen ein- oder zweiteiligen Materialstreifen auf Pappe, Plastik oder dergleichen eine Rückwand gebildet ist, auf welche ein vorderer Teil mit Zwei quer verlaufenden Auffalzungen angeordnet ist. Die Auffalzungen weisen Öffnungen auf, in die ein Gegenstand einsetzbar ist. Die mit Auffalzungen versehene Vorderfront können mit einer Öffnung versehen sein, so daß der Gegenstand sowohl von der Vorder- als auch von der Rückseite betrachtet werden kann. Die vorbekannte Verpackung ist schwierig zu öffnen, so daß die Entnahme des Gegenstandes aus der Verpackung erschwert ist, da die Bereiche zum Anfassen und damit zum Ausüben von Kräften nicht im Bereich der vergleichsweise schmalen Haltestege angreifen. Schließlich ist die präsentative Fläche zur Anordnung von Werbung, Informationen und dergleichen durch die Ausbildung der Auffalzungen in der Vorderfront unterbrochen und damit ungünstig.

Aus der US-PS 3 658 175 ist eine Verpackung für längliche Gegenstände offenbart, bei welcher obere und untere Taschen durch die vergleichsweise besondere Falzung eines Materialstreifens gebildet werden. Wichtig ist dabei, daß die Rückwand der oberen Tasche als Klappe ausgebildet ist, damit sich längliche Gegenstände einschieben bzw. entnehmen lassen.

Davon ausgehend liegt der Erfindung die **Aufgabe** zugrunde, eine gattungsgemäße Verpackung dahingehend weiterzubilden, daß diese in einfacher Weise preisgünstig herstellbar ist, daß Produkt verkaufsfördernd präsentiert und vollständig aus in einfacher Weise recycelbaren Materialen besteht.

Zur technischen **Lösung** dieser Aufgabe wird die gattungsgemäße Verpackung dadurch weitergebildet, daß beide übereinander angeordnete Papier- oder Pappstreifen im Querschnitt im wesentlichen U-förmig gefalzt sind, wobei die Falzungen des zweiten Papier- oder Pappstreifens innerhalb der Falzungen des ersten Papier- oder Pappstreifens an Schmalseiten der Öffnungen angeordnet sind und Stege, welche die Längsseiten der Öffnungen bilden, an dem unteren Papier- oder Pappstreifen befestigt sind.

Die erfindungsgemäße Verpackung hat den Vorteil, daß sie aus nur zwei in einfacher Weise entsorgbaren, übereinander angeordneten Papier- oder Pappstreifen besteht und durch die in dem zweiten Papier- oder Pappstreifen angeordnete, die Aufnahmevorrichtung bildende Öffnung eine verkaufsfördernde Präsentation ermöglicht. Bei der erfindungsgemäßen Verpackung wird das zu vermarktende Produkt in der Öffnung derart gehalten, daß das Produkt gut sichtbar für den Kunden angeordnet ist und gegen eine unbefugte Herausnahme aus der Verpackung geschützt ist. Ferner ist es bei der erfindungsgemäßen Verpackung vorteilhaft, daß eine derartige Verpackung in einfacher Weise mit relativ geringen Kosten herstellbar ist, da die Verpackung lediglich aus preiswertem Papier- bzw. preiswerter Pappe besteht. Durch die Verwendung von Papier oder Pappe kann ferner die Gestaltung der Sichtflächen in vielfältiger Weise mit unterschiedlichen Mustern und Designs erfolgen. Letztlich ist es auch vorteilhaft, daß die Verarbeitung von Papier oder Papper keine aufwendigen Maschinen erfordert, wie es beispielsweise bei der Verarbeitung von Kuststoffen notwendig ist, da die auf die Blisterkarten aufgeklebten Blister unter Wärme geformt werden müssen. Die erfindungsgemäße Verpackung hat ferner den Vorteil, daß das zu präsentierende Produkt gut sichtbar in den die Aufnahmevorrichtung bildenden Öffnung einsetzbar ist.

Bei der erfindungsgemäßen Verpackung ist vorgesehen, daß die beiden übereinander angeordneten Papier- oder Pappstreifen im Querschnitt im wesentlichen U-förmig gefalzt sind, wobei die Falzungen des zweiten Papier- oder Pappstreifens innerhalb der Falzungen des ersten Papier- oder Pappstreifens an Schmalseiten der im wesentlichen rechteckigen Öffnung angeordnet sind und Stege, welche Längsseiten der Öffnung bilden, an dem unten angeordneten Papier- oder Pappstreifen befestigt sind. Bei dieser Ausführungsform der erfindungsgemäßen Verpackung wird das zu präsentierende Produkt zwischen dem oberen und dem unteren Papier- oder Pappstreifen gehalten, wobei die Längsseiten der im oberen Papier- oder Pappstreifen ausgebildeten Öffnung in Richtung des unteren Papier- oder Pappstreifens gefalzt und auf diesem befestigt sind. Durch diese Ausgestaltung ist es in besonders einfacher Weise möglich, das zu präsentierende Produkt aus der Verpackung herauszunehmen, da es in einfacher Weise greifbar ist und lediglich durch die Schmalseiten der im oberen Papier- oder Pappstreifen ausgebildeten Öffnung gehalten ist.

Zum Aufdruck von Werbung oder Informationen für die Bedienung des in der Verpackung dargebotenen Produktes ist vorgesehen, daß oberhalb der Aufnahmevorrichtung eine Informationsfläche ausgebildet ist. Diese Informationsfläche ist gemäß einem weiteren Merkmal der Erfindung vorzugsweise im wesentlichen kreisförmig ausgebildet, so daß sie eine verkaufsfördernde Wirkung auf den Kunden ausübt.

Eine zweite ebenfalls der Werbung oder der Information dienende Informationsfläche ist unterhalb der Aufnahmevorrichtung angeordnet.

Zur Präsentation mehrerer gleicher oder unterschiedlicher Produkte ist es bei einer Weiterentwicklung vorgesehen, daß mehrere Aufnahmevorrichtungen in Längsrichtung untereinander und/oder nebeneinander angeordnet sind. Bei dieser Weiterentwicklung ist es vorteilhaft, daß beispielsweise mehrere Spender für Rasierklingeneinheiten in einer Verpackung präsentiert werden können oder daß ein Spender für Rasierklingeneinheiten mit einem zugehörigen Rasierer in der Verpackung angeordnet ist.

Schließlich ist gemäß einem weiteren Merkmal der Erfindung eine Durchbrechung vorgesehen, welche als Aufhängung oberhalb der Aufnahmevorrichtung in dem Papier- oder Pappstreifen angeordnet ist. Diese Ausführungsform ermöglicht die Präsentation der in die Verpackung gepackten Produkte an sogenannten Hängeständern, welche dem Kunden eine große Auswahl suggerieren.

Weitere Einzelheiten und Vorteil der erfindungsgemäßen Verpackung ergeben sich aus der nachfolgenden Beschreibung der zugehörigen Zeichnungen, in denen bevorzugte Ausführungsformen einer erfindungsgemäß ausgebildeten Verpackung schematisch dargestellt worden sind. In den Zeichnungen zeigen:
- Fig. 1: eine aus dem Stand der Technik bekannte Verpackung in Ansicht;
- Fig. 2: die Verpackung gemäß Fig. 1 in Seitenansicht;
- Fig. 3: eine Verpackung in einer erfindungsgemäßen zweiten Ausführungsform in Ansicht;
- Fig. 4: die Verpackung gemäß Fig. 3 in Seitenansicht;
- Fig. 5: eine Verpackung in einer weiteren erfindungsgemäßen Ausführungsform in Ansicht und
- Fig. 6: die Verpackung gemäß Fig. 5 in Seitenansicht.

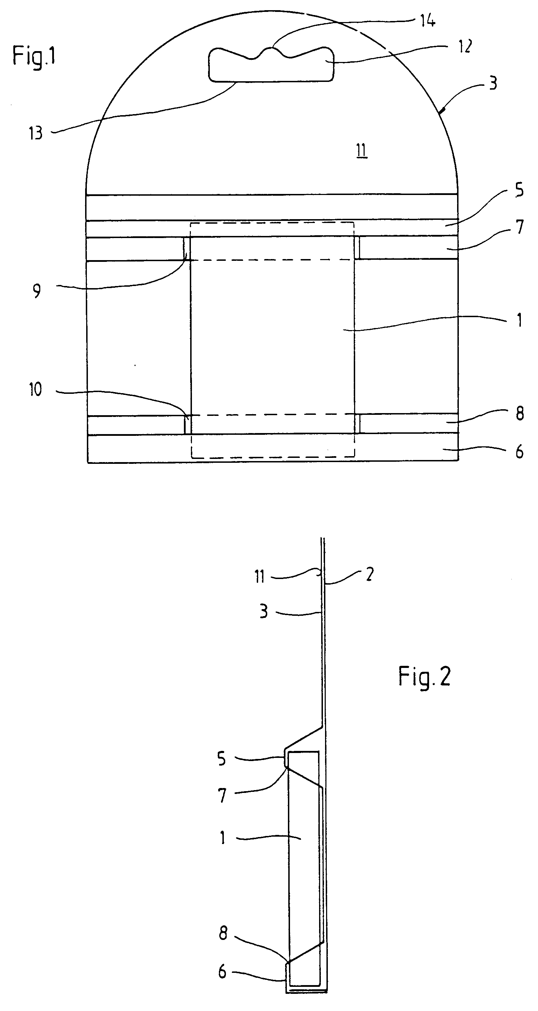

Die in den Figuren 1 bis 6 dargestellten Verpackungen zur Präsentation von mit Rasierklingeneinheiten befüllten Spendern 1 haben einen unteren Pappstreifen 2, auf dem ein zweiter, oberer Pappstreifen 3 angeordnet ist.

Bei der in den Figuren 1 und 2 dargestellten Verpackung nach dem Stand der Technik hat der obere Pappstreifen 3 zwei quer zu seiner Längsrichtung verlaufende Auffalzungen 5, 6, von denen die Auffalzung 6 am unteren Ende der Verpackung angeordnet ist. Die Auffalzungen 5, 6 sind im wesentlichen trapezförmig ausgebildet und haben in sich gegenüberliegend angeordneten Flächen 7, 8 Öffnungen 9,10. Die Öffnungen 9,10 bilden die Aufnahmevorrichtung für den Spender 1 und sind rechteckig ausgebildet.

Oberhalb der Auffalzung 5 weist die Verpackung eine Informationsfläche 11 auf, auf welcher Werbeaufschriften oder Bedienungsanleitungen aufdruckbar sind. Die Informationsfläche 11 ist zur Unterstützung ihrer Werbewirksamkeit halbkreisförmig ausgebildet. In der Informationsfläche 11 ist eine Durchbrechung 12 angeordnet, welche eine untere, gerade Kante 13 und eine obere, wellenförmig ausgebildete Kante 14 hat. Die Durchbrechung 12 dient als Aufhängung, wenn die Verpackung in sogenannten Hängeständern präsentiert wird.

Die beiden übereinander angeordneten Pappstreifen 2,3 sind im Bereich der Informationsfläche 11 und an der unteren Auffalzung 6 miteinander verklebt. Ferner sind die beiden Pappstreifen 2,3 im Bereich zwischen den Auffalzungen 5 und 6 miteinander verklebt.

Bei dieser vorbekannten Verpackung werden die Spender 1 vor dem Verkleben der beiden Pappstreifen 2,3 im Bereich der Auffalzung 6 von unten in die Öffnungen 9,10 eingeschoben. Die Klebeverbindung im Bereich der Auffalzung 6 ist bei dieser Ausführungsform weitgehend frei von durch den Spender 1 erzeugten Belastungen.

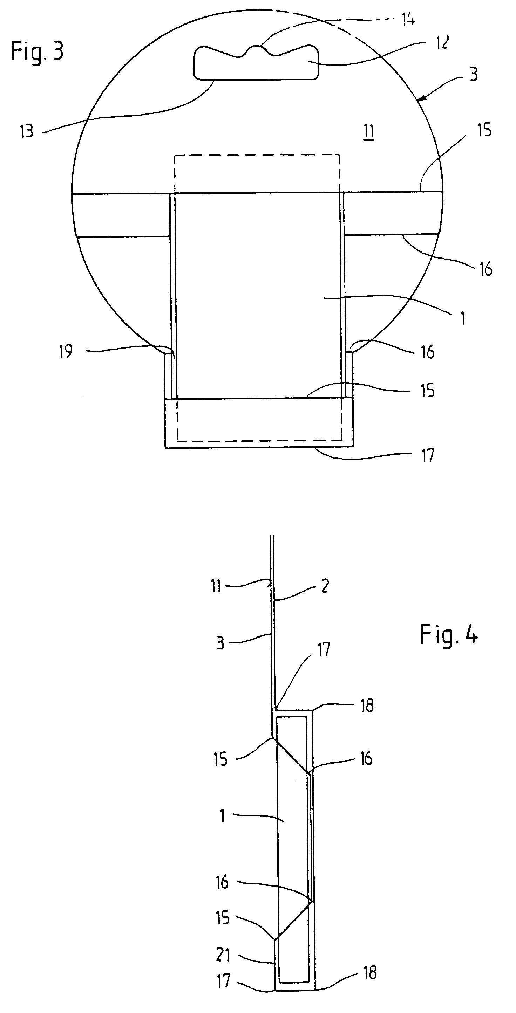

Bei dem in den Figuren 3 und 4 dargestellten Ausführungsbeispiel nach der Verpackung nach der Erfindung sind der untere Pappstreifen 2 und der obere Pappstreifen 3 einteilig ausgebildet. Der untere Pappstreifen 2 ist unterhalb der auf dem oberen Pappstreifen 3 angeordneten Informationsfläche 11 U-förmig gefalzt. Der obere Pappstreifen 3 ist ebenfalls unterhalb der Informationfläche 11 im wesentlichen U-förmig gefalzt, wobei die Falzungen 15,16 des Pappstreifens 3 innerhalb der Falzungen 17,18 des unteren Pappstreifens 2 angeordnet sind, so daß durch die in eine U-förmige Aufnahme hineinragenden Teile des Pappstreifens 3 in Verbindung mit Öffnungen 19,20 die Aufnahmevorrichtung für den Spender 1 gebildet ist. Somit ist der Spender 1 zwischen dem oberen Pappstreifen 3 und dem unteren Pappstreifen 2 gehalten.

Im Bereich der Informationsfläche 11 sind die beiden Pappstreifen 2,3 miteinander verklebt. Zwischen der Falzung 15 und der Falzung 17 ist eine weitere Informationsfläche 21 angeordnet, welche ebenfalls für Werbezwecke oder Informationszwecke nutzbar ist. Das zweite Ausführungsbeispiel der Verpackung weist ebenfalls im Bereich der Informationsfläche 11 eine Durchbrechung 12 auf, welche entsprechend der in der Fig. 1 dargestellten Durchbrechung 12 ausgebildet ist.

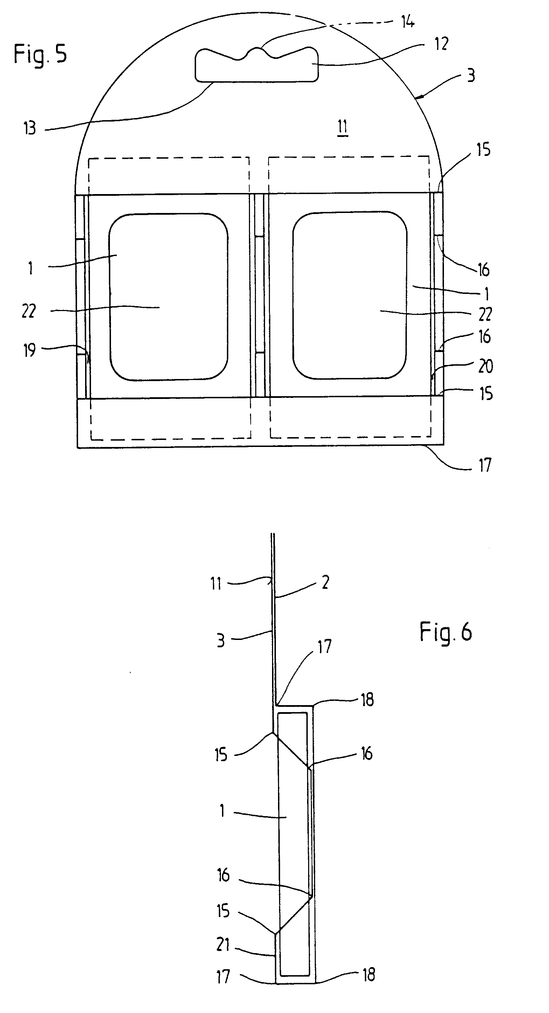

In den Figuren 5 und 6 ist ein drittes Ausführungsbeispiel der Verpackung dargestellt, welche für die Präsentation von zwei nebeneinander angeordneten Spendern 1 verwendbar ist. Die in den Figuren 5 und 6 dargestellte Verpackung entspricht ansonsten der in den Figuren 3 und 4 dargestellten Verpackung.

Bei dem in den Figuren 5 und 6 dargestellten Ausführungsbeispiel weist der erste Pappstreifen 2 im Bereich zwischen den Falzungen 16 Öffnungen 22 auf, die eine Betrachtung des Produktes auch von der Rückseite der Verpackung erlauben. Diese Öffnungen 22 können verschiedenartig ausgestaltet sein, so daß sie an das jeweilig zu präsentierende Produkt, beispielsweise den Spender 1 angepasst sind.

### Bezugszeichenliste

- 1: Spender
- 2: Pappstreifen
- 3: Pappstreifen
- 5: Auffalzung
- 6: Auffalzung
- 7: Fläche
- 8: Fläche
- 9: Öffnung
- 10: Öffnung
- 11: Informationsfläche
- 12: Durchbrechung
- 13: Kante
- 14: Kante
- 15: Falzung
- 16: Falzung
- 17: Falzung
- 18: Falzung
- 19: Öffnung
- 20: Öffnung
- 21: Informationsfläche
- 22: Öffnung

## Patentansprüche

1. Verpackung zur Präsentation von im wesentlichen quaderförmigen Waren, insbesondere von mit Rasierklingeneinheiten befüllten Spendern, mit einem Papier- oder Pappstreifen (2) und einer mindestens einen Spender haltenden Aufnahmevorrichtung, wobei auf dem Papier- oder Pappstreifen (2) ein zweiter Papier- oder Pappstreifen (3) angeordnet ist, der zwei quer zu seiner Längsrichtung verlaufende mit Abstand zueinander parallel angeordnete Auffalzungen (5,6) aufweist, in denen zwei sich gegenüberliegend angeordnete, Aufnahmevorrichtungen bildende im wesentlichen rechteckige Öffnungen (9,10;19,20) ausgebildet sind,
**dadurch gekennzeichnet,**
daß beide übereinander angeordnete Papier- oder Pappstreifen (2,3) im Querschnitt im wesentlichen U-förmig gefalzt sind, wobei die Falzungen (15,16) des zweiten Papier- oder Pappstreifens (3) innerhalb der Falzungen (17,18) des ersten Papier- oder Pappstreifens (2) an Schmalseiten der Öffnungen (9,10;19,20) angeordnet sind und Stege, welche die Längsseiten der Öffnungen (9,10;19,20) bilden, an dem unteren Papier- oder Pappstreifen (2) befestigt sind.

2. Verpackung nach Anspruch 1, dadurch gekennzeichnet, daß der Abstand zwischen den beiden Papier- oder Pappstreifen (2,3) im Bereich der die Aufnahmevorrichtung bildenden Öffnungen (9,10;19,20) ungefähr der Dicke der zu präsentierenden Ware entspricht.

3. Verpackung nach Anspruch 1 oder 2, dadurch gekennzeichnet, daß oberhalb der Aufnahmevorrichtung eine Informationsfläche (11) ausgebildet ist.

4. Verpackung nach Anspruch 3, dadurch gekennzeichnet, daß die Informationsfläche (11) im wesentlichen kreisförmig ausgebildet ist.

5. Verpackung nach einem der Ansprüche 1 bis 4, dadurch gekennzeichnet, daß unterhalb der Aufnahmevorrichtung eine zweite Informationsfläche (21) angeordnet ist.

6. Verpackung nach einem der Ansprüche 1 bis 5, dadurch gekennzeichnet, daß mehrere Aufnahmevorrichtungen in Längsrichtung untereinander angeordnet sind.

7. Verpackung nach einem der Ansprüche 1 bis 6, dadurch gekennzeichnet, daß mehrere Aufnahmevorrichtungen in Längsrichtung nebeneinander angeordnet sind.

8. Verpackung nach einem der Ansprüche 1 bis 7, gekennzeichnet durch eine Durchbrechung (12), welche als Aufhängung oberhalb der Aufnahmevorrichtung in dem Papier- oder Pappstreifen angeordnet ist.

9. Verpackung nach einem der Ansprüche 1 bis 8, dadurch gekennzeichnet, daß in dem ersten Papier- oder Pappstreifen (2) mindestens eine Öffnung (22) angeordnet ist, die eine Betrachtung der zu präsentierenden Ware zuläßt.

## Claims

1. A packaging for presenting goods of an essentially parallelepipedal shape, in particular dispensers of razor blade units, with a first paper or cardboard strip (2) and a receiving means for holding at least one dispenser, whereby a second paper or cardboard strip (3) is arranged on the first paper or card board strip both being provided with folded portions (5, 6) extending parallel to one another in a direction transverse to their longitudinal direction and being arranged together in such a way as to form the receiving means with essentially rectangular openings (9, 10; 19, 20),
characterised in that,
when the two paper or cardboard strips (2, 3) are folded in an essentially U shaped manner, the folded portions (15, 16) of the second paper or cardboard strip (3) are arranged inside the folded portions (17, 18) of the first paper or cardboard strip (2) on the narrow side of the openings (9, 10; 19, 20) and webs, which form the elongate sides of the openings (9, 10; 19, 20) are fixed to the lower paper or cardboard strip (2).

2. A packaging according to claim 1, characterised in that, the distance between the two paper or cardboard strips (2, 3), in the region of the openings (9, 10; 19, 20) forming the receiving means, corresponds approximately to the thickness of the goods being presented.

3. A packaging according to claim 1 or 2, characterised in that, an information surface (11) is provided on the upper half of the receiving device.

4. A packaging according to claim 3, characterised in that the information surface (11) is essentially circular.

5. A packaging according to any one of claims 1 to 4, characterised in that a second information surface (21) is arranged on the lower half of the receiving device.

6. A packaging according to any one of claims 1 to 5, characterised in that a plurality of receiving means are provided arranged under one another in the longitudinal direction.

7. A packaging according to any one of claims 1 to 6, characterised in that a plurality of receiving means are provided arranged adjacent one another in the longitudinal direction.

8. A packaging according to any one of claims 1 to 7, characterised in that a hole (12) in said paper or cardboard strips is arranged above said receiving device for suspending said packaging.

9. A packaging according to any one of claims 1 to 8, characterised in that the first paper or cardboard strip (2) is arranged with at least one opening (22) to permit the inspection of the goods being presented.

## Revendications

1. Emballage pour la présentation de produits de forme sensiblement parallélépipèdes, en particulier de distributeurs remplis d'ensembles de lames de rasage, muni d'une bande en papier ou en carton (2) et d'un dispositif de logement, contenant au moins un distributeur, une deuxième bande en papier ou en carton (3) étant disposée sur la première bande en papier ou en carton (2) et présentant deux pliages (5,6) s'étendant transversalement par rapport à sa direction longitudinale et disposés parallèlement et à distance l'un de l'autre, pliages dans lesquels sont réalisées deux ouvertures ou découpes (9, 10; 19, 20) sensiblement rectangulaires et disposées à l'opposé, constituant les dispositifs de logement, caractérisé en ce que les deux bandes en papier ou en carton (2, 3) disposées l'une au-dessus de l'autre sont pliées avec une section transversale sensiblement en U, en ce que les pliages (15, 16) de la deuxième bande en papier ou en carton (3) sont disposés à l'intérieur des pliages (17, 18) de la première bande en papier ou en carton (2), sur les faces ou arêtes étroites des ouvertures (9, 10; 19, 20) et en ce que des barrettes, constituant les faces ou arêtes longues des ouvertures (9, 10; 19, 20), sont fixées sur la bande en papier ou en carton inférieure (2).

2. Emballage selon la revendication 1, caractérisé en ce que la distance entre les bandes en papier ou en carton (2, 3) dans la zone des ouvertures (9, 10; 19, 20) constituant le dispositif de logement correspond approximativement à l'épaisseur du produit à présenter.

3. Emballage selon la revendication 1 ou 2, caractérisé en ce qu'au-dessus du dispositif de logement est prévue une surface d'information (11).

4. Emballage selon la revendication 3, caractérisé en ce que la surface d'information (11) est sensiblement de forme circulaire.

5. Emballage selon l'une des revendications 1 à 4, caractérisé en ce qu'une deuxième surface d'information (21) est disposée au-dessous du dispositif de réception.

6. Emballage selon l'une des revendications 1 à 5, caractérisé en ce que plusieurs dispositifs de logement sont disposés les uns au-dessous des autres dans la direction longitudinale.

7. Emballage selon l'une des revendications 1 à 5, caractérisé en ce que plusieurs dispositifs de logement sont disposés les uns à côté des autres dans la direction longitudinale.

8. Emballage selon l'une des revendications 1 à 7, caractérisé en ce qu'une découpe (12) servant à l'accrochage est disposée au-dessus du dispositif de logement, dans la bande en, papier ou en carton.

9. Emballage selon l'une des revendications 1 à 8, caractérisé en ce qu'au moins une ouverture (22), permettant l'observation du produit à présenter, est ménagée dans la première bande en papier ou en carton (2).
